# EUROPEAN PATENT SPECIFICATION

(11) **EP 2 827 141 B1**
(45) Date of publication and mention of the grant of the patent: **18.09.2019**
(21) Application number: 14177200.4
(22) Date of filing: 16.07.2014
(51) Int. Cl.: G01N 27/404

(54) **Device and method for electrochemical gas sensing**
Vorrichtung und Verfahren zur elektrochemischen Gasmessung
Dispositif et procédé de détection de gaz électrochimique

(30) Priority: 19.07.2013 EP 13177256
(43) Date of publication of application: 21.01.2015
(73) Proprietor: Stichting IMEC Nederland, 5656 AE Eindhoven (NL)
(72) Inventor: Oudenhoven, Jozef Franciscus Maria, 3001 Leuven (BE); Verheijden, Greja Johanna Adriana Maria, 3001 Leuven (BE); Zevenbergen, Marcel Arie Günther, 3001 Leuven (BE)
(74) Representative: Patent Department IMEC

(56) References cited:
- EP-A1- 2 506 001
- US-A1- 2007 059 584
- US-B1- 7 232 511
- US-B2- 7 758 735
- FASCHING R ET AL: "A miniaturized amperometric CO2 sensor based on dissociation of copper complexes", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 93, no. 1-3, 1 August 2003 (2003-08-01), pages 197-204, XP004437098, ISSN: 0925-4005, DOI: 10.1016/S0925-4005(03)00176-X

## Description

### Technical Field

The present invention relates generally to the field of electrochemical sensors, and more specifically to a device and a method for electrochemical gas sensing comprising a free-standing ion-liquid film.

### Background

Electrochemical sensors, e.g. for the sensing of gasses, are based on the principle of electrochemical reactions that occur in an electrochemical cell into which the gasses that need to be detected dissolve. An electrochemical cell generally consists of two or more electrodes, at which electrochemical reactions occur and currents are generated that can be measured. If an appropriate voltage is applied, the currents scale with the amount of the gas to be determined. To be able to operate, all electrodes have to be on one side connected to an electrical circuit, and in the electrochemical cell these need to be in contact with a continuous (liquid) medium that is capable of transporting ions. This medium is denominated as electrolyte, and usually consists of a liquid containing ions, i.e. a salt solution or an ionic liquid. Ionic liquids are preferred for this application because these possess the property that these have a negligible vapour pressure, and will therefore not evaporate.

A known electrochemical sensor in the art comprising a porous membrane is described in US patent application 2010/0133120 A1. Further electrochemical sensors in the art comprising a membrane-free electrolyte are described in paper "Electronic Sensing of Ethylene Employing a Thin lonic-Liquid Layer", Zevenbergen et al., Analytical Chemistry, 2011, 83 (16), pp 6300-6307, and in European patent application EP 2 506 001 A1.

### Summary

According to exemplary embodiments of the invention, an improved device and method for electrochemical gas sensing is provided with higher sensing sensitivity.

According to the invention there is provided a device for electrochemical gas sensing according to claim 1. At least one of the electrodes may be configured to serve as a pillar structure to keep the free-standing electrolyte film stable without film rupture. The height of one of the electrodes may be selected such that the distance from its top surface to the free-standing electrolyte film's surface is at least 25 % less than the total electrolyte film thickness. The height of one of the electrodes may be equal or less than 25µm, and preferably around 5µm.

The pillar structures may comprise a non-conductive pillar covered completely or partially with an electrode material. The pillar structures have a width in a range between 1µm to 100µm and preferably around 10µm. The pillar structures may be placed at a distance between each other in a range between 1µm to 50µm, and preferably around 10µm. The distance between the pillar structures depends on the properties of the free-standing electrolyte film and is selected such that the free-standing electrolyte film is stable and without rupture.

According to another exemplary embodiment, the device comprises at least one working electrode and a reference electrode placed over a non-conductive substrate and the height of the at least one working electrode's top surface in the direction perpendicular to the non-conductive substrate is greater than that of the reference electrode's top surface. The height of the at least one working electrode's top surface in the direction perpendicular to the non-conductive substrate may be at least twice that of the reference electrode's top surface.

According to another exemplary embodiment, the device comprises a first working electrode configured for reacting with at least a first molecule and a second working electrode configured for reacting with a second molecule and the height of the second working electrode's top surface in the direction perpendicular to the non-conductive substrate is greater than the height of the of the first working electrode's top surface.

According to another exemplary embodiment, the electrodes are positioned in an interdigitated layout.

The invention also relates to an electronic system comprising a device for electrochemical gas sensing according to any of the embodiments herein described. The electronic system may further comprise heating or cooling means for keeping the device for electrochemical gas sensing at a certain working temperature.

The invention further relates to a method for electrochemical gas sensing comprising exposing a device according to any of the embodiments herein described to a gas medium. The method may further comprise heating or cooling of the device for keeping it at a certain working temperature.

### Brief description of the drawings

The above and other aspects of the device and a method for electrochemical gas sensing according to the present invention will be shown and explained with reference to the non-restrictive example embodiments described hereinafter.
**Figure 1** shows a cross-sectional view of a device for electrochemical gas sensing according to a first exemplary embodiment of the invention.
**Figure 2** shows a top view of a device for electrochemical gas sensing according to a second exemplary embodiment of the invention.
**Figure 3** shows a top view of a device for electrochemical gas sensing according to a third exemplary embodiment of the invention.
**Figure 4** shows a cross-sectional view of a device for electrochemical gas sensing according to a fourth exemplary embodiment of the invention.
**Figure 5** shows a cross-sectional view of a device for electrochemical gas sensing according to a fifth exemplary embodiment of the invention.
**Figure 6** shows a cross-sectional view of a device for electrochemical gas sensing according to a sixth exemplary embodiment of the invention.
**Figure 7** illustrates a graph of the cross-sectional thickness profile of a device for electrochemical gas sensing according to a seventh exemplary embodiment of the invention.
**Figure 8** illustrates a graph of the sensitivity for gas sensing of a device according to an exemplary embodiment of the invention.
**Figure 9** illustrates a graph of the sensitivity for gas sensing of a state of the art electrochemical gas sensor.
**Figure 10** shows a top view of a device for electrochemical gas sensing according to an exemplary embodiment of the invention.
**Figure 11** shows a cross-sectional view of a device for electrochemical gas sensing according to an exemplary embodiment of the invention.
**Figure 12** shows a cross-sectional view of a device for electrochemical gas sensing according to an exemplary embodiment of the invention.

### Detailed description

In the following, in the description of exemplary embodiments, various features may be grouped together in a single embodiment, figure, or description thereof for the purpose of streamlining the disclosure and aiding in the understanding of one or more of the various inventive aspects. This is however not to be interpreted as the invention requiring more features than the ones expressly recited in the main claim. Furthermore, combinations of features of different embodiments are meant to be within the scope of the invention, as would be clearly understood by those skilled in the art. Additionally, in other instances, well-known methods, structures and techniques have not been shown in detail in order not to obscure an understanding of the description.

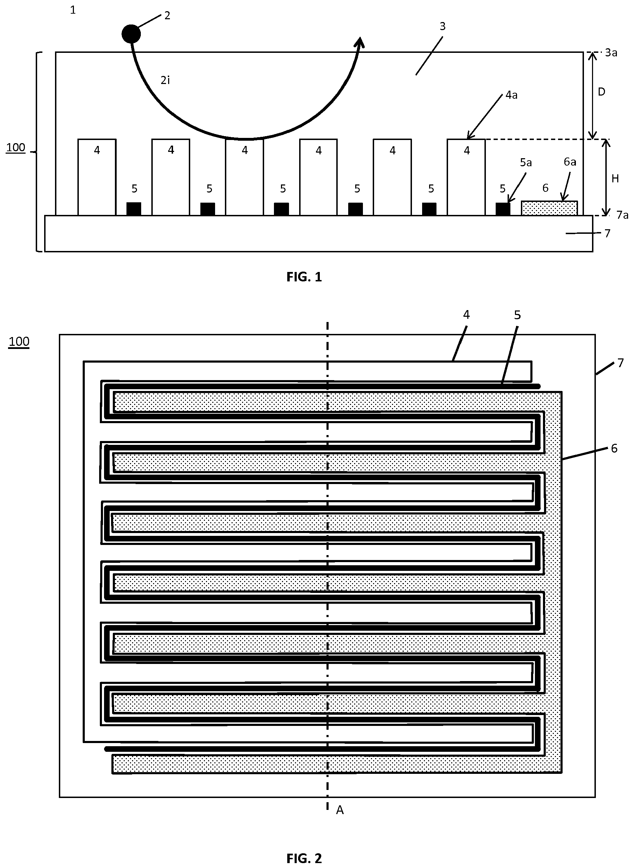

**Figure 1** shows a cross-sectional view of an exemplary device **100** for electrochemical gas sensing according to an embodiment of the invention, comprising a non-conductive substrate **7**, a working electrode **4**, a counter electrode **6**, a reference electrode **5** and an electrolyte film in the form of an ionic liquid film **3** covering the electrodes.

According to an exemplary embodiment, the working electrode **4** is elevated compared to the other electrodes **5**, **6**, that is, the working electrode **4** is higher or has a greater height **H** in the direction perpendicular to the substrate surface. In this way, the working electrode top surface **4a** is located at a closer distance **D** to the ionic liquid film surface **3a** than the other electrode's top surfaces **5a, 6a.**

In operation, a gas medium **1** comprising a gas molecule **2** that wants to be detected will dissolve in the electrolyte **3**, as depicted by trajectory **2i**, and subsequently react with the top surface **4a** of the working electrode **4,** which will serve for detection of such gas molecule. The working or sensing electrode **4** is maintained at a potential at which the gas molecule **2** will react, and is set with respect to the reference electrode **5.** A third electrode serves as counter electrode **6.**

According to an exemplary embodiment of the invention, the distance D between the electrolyte-gas interface **3a**, where the gas is dissolved, and the electrolyte-working electrode interface, where said gas will react, is decreased. According to an exemplary embodiment of the invention, the device **100** for electrochemical gas sensing is configured such that the working electrode top surface **4a** is brought closer to the electrolyte-gas interface **3a.**

According to an exemplary embodiment of the invention, the device **100** for electrochemical gas sensing is configured such that the working electrodes also serve as pillars to keep the ionic liquid film **3** stable, without film rupture. This will be beneficial to prevent rupturing of the electrolyte film at the electrode surface, because the top area covered with a thin layer of electrolyte will be smaller. When a large area is covered by a too thin film, it will rupture and form individual droplets. Advantageously, the sensitivity of the device **100** can be increased, without the need to thin down the ionic liquid film **3.** The liquid film may have a thickness in the range of 0.1 to 100 µm. The basis for the gas detection is an electrochemical reaction at which electrons are released (or consumed), which can be accurately measured as a current. To improve the sensitivity of the sensor, the ratio of the number of detectable molecules in the gas medium **1** to the number of molecules that react at the electrode should be as high as possible. This is achieved, according to an exemplary embodiment, by decreasing the transport distance **D** from the gas medium **1** through the electrolyte **3** to the working electrode top surface **4a.**

According to exemplary embodiments, the height **H** of reference electrode **5** and counter electrode **6** may be in the range of 50 to 500 nm, typically 150 to 250 nm, and that of the working electrode **4** in the range of 300 nm to 50 µm. According to another exemplary embodiment, the height **H** of the working electrode **4** is selected such that the distance **D** from its top surface **4a** to the ionic liquid surface **3a** is at least 25 % less than the total ionic liquid film thickness (from the ionic liquid film surface **3a** to the substrate's surface **7a**) and equal or less than 25µm, and preferably around 5µm. According to another exemplary embodiment, the height **H** of the working electrode 4 is at least twice the height **H** of the reference electrode **5.**

It shall be understood that although in the figure, the distance **D** to the electrolyte film surface **3a** is shown in relation just to the working electrode's top surface **4a**, in general, such distance **D** could also be shown in relation to the top surface of any of the other electrodes. In the same way, although the height **H** from the substrate's surface **7a** is shown in relation just to the working electrode's top surface **4a**, in general, such height **H** could also be shown in relation to the top surface of any of the other electrodes. It shall be also understood that the device **100** for electrochemical gas sensing does not necessarily need three electrodes for sensing. According to other exemplary embodiments, the device **100** for electrochemical gas sensing comprises just two electrodes, a working electrode **4** and a counter electrode **6** which can also function as a reference electrode, and the working electrode **4** is elevated compared to the counter electrode **6.**

**Figure 2** shows a top view of a device **100** for electrochemical gas sensing comprising a non-conductive substrate **7**, a working electrode **4**, a counter electrode **6**, a reference electrode **5.** The ionic liquid film is not shown, but it is understood that it will be located on top of the substrate, covering all the electrodes. The electrodes are positioned in an interdigitated layout. In the exemplary embodiment, the working electrode **4** and the counter electrode **6** are relatively wide, and may be used as current carrying electrodes. The reference electrode **5** is designed as a thin serpentine electrode that meanders between the interdigitated sensing electrode **4** and counter electrode **6.**

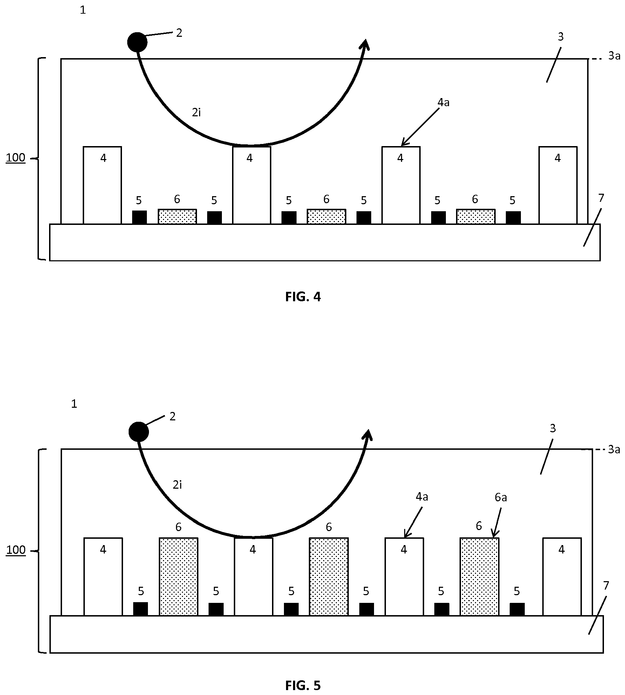

An exemplary cross-sectional view, along axis **A**, of the device **100** of **Figure 2** can be seen in **Figure 4****.** In this exemplary embodiment the working electrode surface **4a** is elevated and brought closer to the ionic liquid film surface **3a.** Another exemplary cross-sectional view, along axis **A**, of the device **100** of **Figure 2** can be seen in **Figure 5****.** In this exemplary embodiment both the working electrode surface **4a** and the counter electrode surface **6a** are elevated and brought closer to the ionic liquid film surface **3a.** Advantageously, in this way, further support and stability of the ionic liquid film **3** is achieved and/or acceleration of the sensing and the counter reactions.

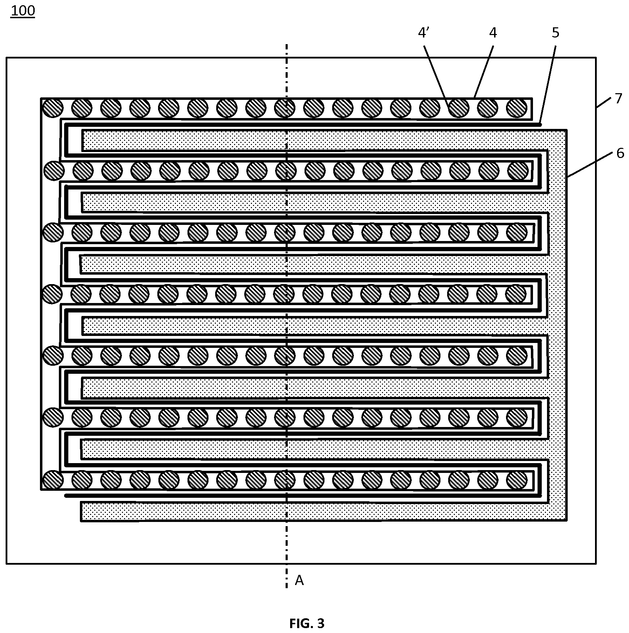

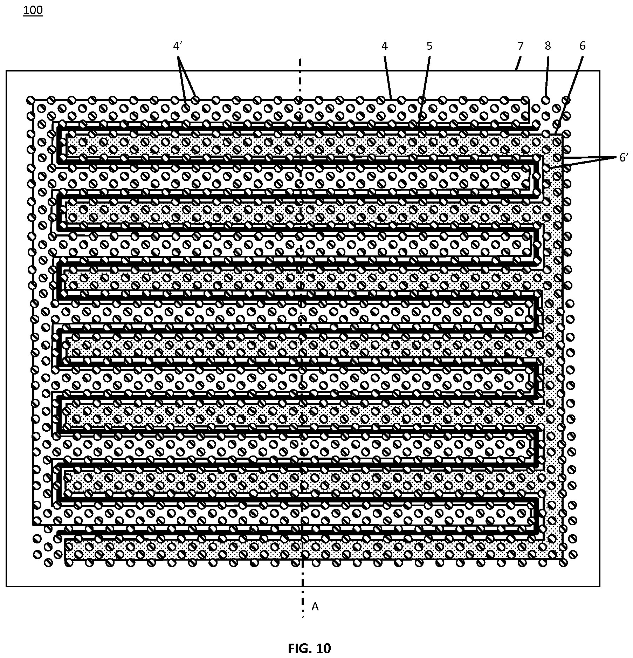

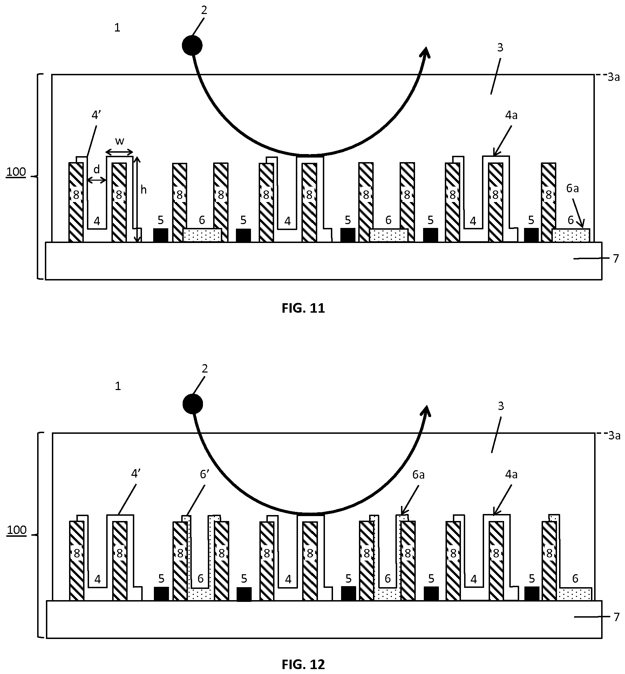

**Figure 3** shows a top view of another exemplary device **100** for electrochemical gas sensing comprising a non-conductive substrate **7**, a working electrode **4**, a counter electrode **6**, a reference electrode **5.** The ionic liquid film is not shown, but it is understood that it will be located on top of the substrate, covering all the electrodes. The electrodes are positioned in an interdigitated layout. In the exemplary embodiment, only some parts of the working electrode **4** are elevated, for example, the working electrode **4** may comprise pillar structures **4'**, separate cylindrical pillar structures as in the figure, or rectangular, which are made of or covered with the electrode material. Advantageously, adding pillars is beneficial not only for bringing the electrode surface closer to the ionic liquid film surface, but also, when designing its distribution, for keeping a larger part of the liquid film relatively thick and/or improve the stability of the liquid film. The use of pillars may reduce the cost of the device due to the use of less material. Furthermore, the use of pillars allows for an acceleration of the sensing and the counter reactions. Exemplary cross-sectional views, along axis **A**, of the device **100** of **Figure 3** can be seen also in **Figure 4** and **Figure 5****.** As shown in **Figure 10** the counter electrode **6** may also comprise pillar structures 6' that contribute to the free-standing electrolyte film stability. Similarly, although not shown, it shall be understood that the reference electrode **5** may also comprise pillar structures. According to another exemplary embodiment, also shown in **Figure 10**, the device may comprise further non-conductive pillar structures **8** placed on the substrate which contribute to the free-standing electrolyte film stability. An exemplary cross-sectional view, along axis **A**, of the device **100** of **Figure 10** can be seen in **Figure 11** and **Figure 12****.** In the exemplary embodiment of **Figure 11**, the working electrode **4** comprises non-conductive pillar structures **8** placed on top of the substrate **7** and covered with an electrode material. The electrode material may cover the pillar structures **8** completely or partially. The working electrode surface **4a** is elevated and brought closer to the ionic liquid film surface **3a.** In the exemplary embodiment of **Figure 12**, both the working electrode **4** and the counter electrode **6** comprise non-conductive pillar structures **8** covered completely or partially with an electrode material. In this exemplary embodiment, both the working electrode surface **4a** and the counter electrode surface **6a** are elevated and brought closer to the ionic liquid film surface **3a.** Advantageously, in this way, further support and stability of the ionic liquid film **3** is achieved and/or acceleration of the sensing and the counter reactions. In the embodiments of **Figure 11** and **Figure 12**, the reference electrode **5** is shown as placed between non-conductive pillar structure **8.** However, it should be understood that the reference electrode **5** may comprise conductive pillar structures or non-conductive pillar structures **8** covered completely or partially with electrode material.

According to an exemplary embodiment, the width **w** of the pillars structures **4'**, **6'**, **8** may be from 1µm to 100µm, and preferably around 10µm. The distance **d** between the pillar structures is defined by the properties of the electrolyte liquid **3** and should be chosen such that a stable liquid film may be formed. According to an exemplary embodiment, the distance **d** between the pillar structures may be from 1µm to 50µm, and preferably 10µm. Advantageously, the use of narrower pillar structures allows for simpler manufacturing of the device. According to another exemplary embodiment, the height **h** of the pillar structures **4'**, **6'**, **8** is selected such that the distance **D** from their top surface **4a, 6a** to the ionic liquid surface **3a** is at least 25 % less than the total ionic liquid film thickness (from the ionic liquid film surface **3a** to the substrate's surface **7a**) and up to 25µm, and preferably around 5µm.

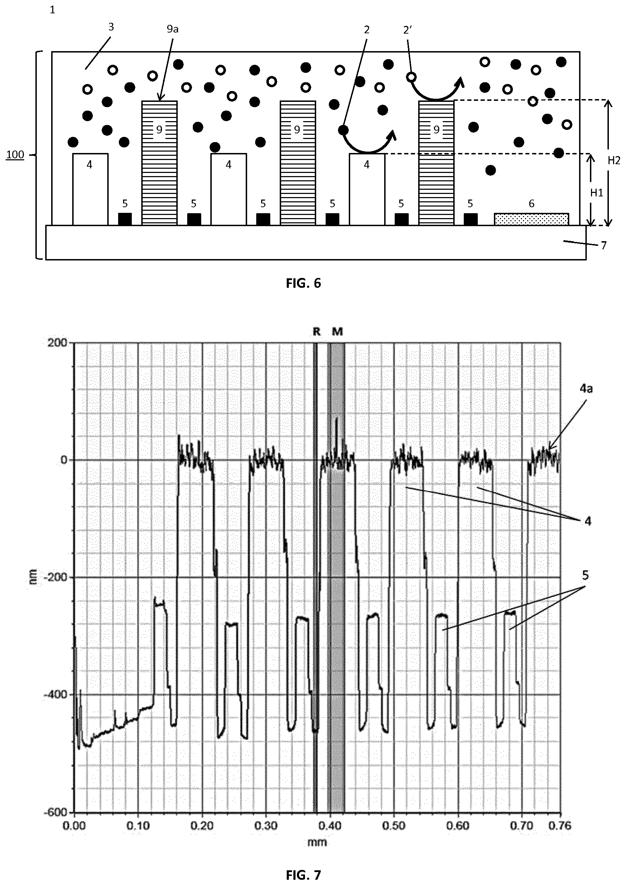

**Figure 6** shows a cross-sectional view of a device **100** for electrochemical gas sensing comprising a non-conductive substrate **7**, a first working electrode **4,** a second working electrode **9,** a counter electrode **6**, a reference electrode **5** and an ionic liquid film **3** covering the electrodes. This exemplary configuration is beneficial in case the first working electrode **4** is sensitive to multiple gas molecules **2**, **2'**, for example, one that has to be detected **2** and one that is considered an undesired species **2'.** In such case, a second working electrode **9** is included that will first remove the undesired gas molecule **2'**, so that the sensing electrode **4** may be used to detect the desired gas molecules **2** selectively. In this exemplary embodiment the height of the second working electrode **9** is greater than that of the first working electrode **4.** Advantageously, by mixing working electrodes reacting to different gas molecules and having different or multiple height levels, cross-sensitivity is mitigated and false positive detections are reduced. Multiple electrode levels may be included to remove gasses to which the sensor would otherwise be cross-sensitive.

In operation, in a gas medium **1** comprising a gas molecule **2** that wants to be detected and an undesired molecule **2'** to which the sensing electrode **4** is cross-sensitive, both gases will dissolve in the electrolyte **3.** The undesired molecules **2'** will selectively react at the level of the second working electrode **9**, so that only the desired gas molecules **2** will reach the first working or sensing electrode **4.**

**Figure 7** illustrates a graph of the cross-sectional profile of a device **100** for electrochemical gas sensing similar to the configuration shown in **Figure 1****.** The graph shows the narrow and lower reference electrodes **5** and the higher and broader working electrodes **4.** A counter electrode, not shown, may be positioned around these electrodes. The sensing electrode **4** and the counter electrode **6** may be made of gold and the reference electrode **5** may be made of platinum. In this exemplary embodiment, the sensing electrode **4** has a height of approximately 0.5 µm and the reference electrode of 0.25 µm.

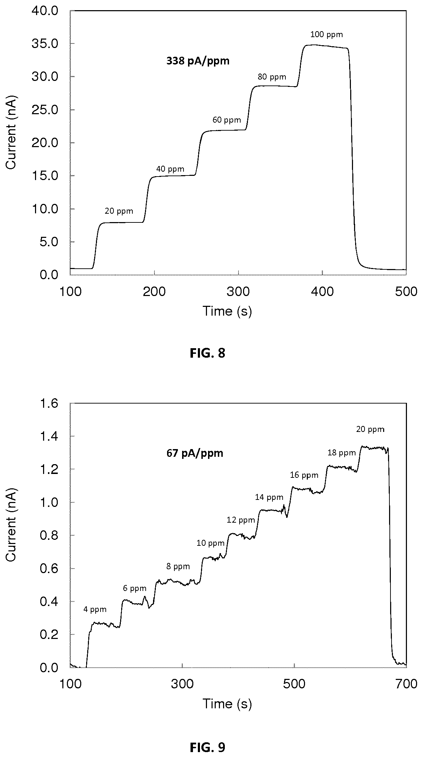

**Figure 8** illustrates a graph of the sensitivity for gas sensing of a device **100** according to an exemplary embodiment of the invention, compared to the sensitivity of a state of the art electrochemical gas sensor shown in **Figure 9****.** The sensitivity of two gas sensing devices, for example, to ethylene was measured with a sensor according to an exemplary embodiment of the invention (Figure 8) and with a sensor not having elevated sensing electrodes (Figure 9). The graphs confirm that the sensitivity of a device according to an exemplary embodiment of the invention is higher (338 pA/ppm ethylene) than the sensitivity of a state of the art electrochemical sensor (67 pA/ppm ethylene). Current state of the art sensors (with the same electrode layout) with non-elevated working electrodes show a sensitivity in the order of 50-100 pA/ppm.

Advantageously, further embodiments may combine the device **100** for electrochemical gas sensing according to any of the embodiments of the invention, with extra electronic circuitry to be integrated in an electronic device system. The electrochemical sensor may be combined with other electronic functions that enhance the sensor performance. In this sense, for example, temperature or humidity sensors may be included or a heating or cooling system may be added for keeping the gas sensing characteristics under certain performance values and/or the sensor at a constant optimal working temperature.

## Claims

1. A device (100) for electrochemical gas sensing, comprising a plurality of electrodes (4, 5, 6, 9) placed over a non-conductive substrate (7) and an electrolyte film (3) covering said electrodes, wherein the plurality of electrodes comprises at least one working electrode (4) and a reference electrode (5), wherein the electrolyte film is an ionic liquid film, wherein the working electrode and the reference electrode present a different distance (D) from their respective top surface (4a, 5a) to the electrolyte film surface (3a), **characterized in that** at least the working electrode (4) comprises pillar structures (4') arranged so to keep the ionic liquid film stable and without rupture.

2. A device (100) according to claim 1 wherein the pillar structures (4') comprise a non-conductive pillar (8) covered completely or partially with an electrode material.

3. A device (100) according to claims 1 or 2 wherein the pillar structures (4') have a width (w) in a range between 1 µm to 100µm.

4. A device (100) according to any of claims 1 to 3 wherein the pillar structures (4') are placed at a distance (d) between each other in a range between 1 µm to 50µm.

5. A device (100) according to any of the previous claims wherein the height (H) of one of the electrodes is selected such that the distance (D) from its top surface to the electrolyte film's surface (3a) is at least 25 % less than the total electrolyte film thickness.

6. A device (100) according to claim 5 wherein the height (H) is equal or less than 25 µm.

7. A device (100) according to any of the previous claims wherein the height (H) of the at least one working electrode's top surface (4a) in the direction perpendicular to the non-conductive substrate is greater than that of the reference electrode's top surface (5a).

8. A device (100) according to claim 7 wherein the height (H) of the at least one working electrode's top surface (4a) in the direction perpendicular to the non-conductive substrate is at least twice that of the reference electrode's top surface (5a).

9. A device (100) according to any of the previous claims comprising a first working electrode (4) configured for reacting with at least a first molecule (2) and a second working electrode (9) configured for reacting with a second molecule (8) and wherein the height (H2) of the second working electrode's top surface (9a) in the direction perpendicular to the non-conductive substrate is greater than the height (H1) of the of the first working electrode's top surface (4a).

10. A device (100) according to any of the previous claims wherein the electrodes are positioned in an interdigitated layout.

11. An electronic system comprising a device (100) for electrochemical gas sensing according to any one of claims 1 to 10.

12. The electronic system according to claim 11 further comprising heating or cooling means for keeping the device (100) for electrochemical gas sensing at a certain working temperature.

13. A method for electrochemical gas sensing comprising exposing a device (100) according to any one of claims 1 to 10 to a gas medium (1).

14. A method for electrochemical gas sensing according to claim 13 further comprising heating or cooling of the device (100) for keeping it at a certain working temperature.

## Patentansprüche

1. Vorrichtung (100) zur elektrochemischen Gasmessung, umfassend eine Vielzahl von Elektroden (4, 5, 6, 9), die über einem nichtleitenden Substrat (7) platziert sind, und einen Elektrolytfilm (3), der die Elektroden bedeckt, wobei die Vielzahl von Elektroden mindestens eine Arbeitselektrode (4) und eine Referenzelektrode (5) umfasst, wobei der Elektrolytfilm ein ionischer Flüssigkeitsfilm ist, wobei die Arbeitselektrode und die Referenzelektrode einen unterschiedlichen Abstand (D) von ihrer jeweiligen oberen Oberfläche (4a, 5a) zur Elektrolytfilmoberfläche (3a) zeigen, **dadurch gekennzeichnet, dass** mindestens die Arbeitselektrode (4) Säulenstrukturen (4') umfasst, die angeordnet sind, um den ionischen Flüssigkeitsfilm stabil und ohne Bruch zu halten.

2. Vorrichtung (100) nach Anspruch 1, wobei die Säulenstrukturen (4') eine nichtleitende Säule (8) umfassen, die vollständig oder teilweise mit einem Elektrodenmaterial bedeckt ist.

3. Vorrichtung (100) nach Ansprüchen 1 oder 2, wobei die Säulenstrukturen (4') eine Breite (w) in einem Bereich zwischen 1 µm bis 100 µm aufweisen.

4. Vorrichtung (100) nach einem der Ansprüche 1 bis 3, wobei die Säulenstrukturen (4') in einem Abstand (d) voneinander in einem Bereich zwischen 1 µm bis 50 µm platziert sind.

5. Vorrichtung (100) nach einem der vorstehenden Ansprüche, wobei die Höhe (H) einer der Elektroden so ausgewählt ist, dass der Abstand (D) von ihrer oberen Oberfläche zur Oberfläche (3a) des Elektrolytfilms mindestens 25 % kleiner als die gesamte Elektrolytfilmdicke ist.

6. Vorrichtung (100) nach Anspruch 5, wobei die Höhe (H) gleich oder kleiner als 25 µm ist.

7. Vorrichtung (100) nach einem der vorstehenden Ansprüche, wobei die Höhe (H) der oberen Oberfläche (4a) der mindestens einen Arbeitselektrode in der Richtung senkrecht zum nichtleitenden Substrat größer ist als diejenige der oberen Oberfläche (5a) der Referenzelektrode.

8. Vorrichtung (100) nach Anspruch 7, wobei die Höhe (H) der oberen Oberfläche (4a) der mindestens einen Arbeitselektrode in der Richtung senkrecht zum nichtleitenden Substrat mindestens doppelt so groß ist wie diejenige der oberen Oberfläche (5a) der Referenzelektrode.

9. Vorrichtung (100) nach einem der vorstehenden Ansprüche, umfassend eine erste Arbeitselektrode (4), die konfiguriert ist, um mit mindestens einem ersten Molekül (2) zu reagieren, und eine zweite Arbeitselektrode (9), die konfiguriert ist, um mit einem zweiten Molekül (8) zu reagieren, und wobei die Höhe (H2) der oberen Oberfläche (9a) der zweiten Arbeitselektrode in der Richtung senkrecht zum nichtleitenden Substrat größer ist als die Höhe (H1) der oberen Oberfläche (4a) der Arbeitselektrode.

10. Vorrichtung (100) nach einem der vorstehenden Ansprüche, wobei die Elektroden in einem Interdigital-Layout positioniert sind.

11. Elektronisches System, umfassend eine Vorrichtung (100) zur elektrochemischen Gasmessung nach einem der Ansprüche 1 bis 10.

12. Elektronisches System nach Anspruch 11, weiter umfassend Heiz- oder Kühlmittel, um die Vorrichtung (100) zur elektrochemischen Gasmessung auf einer bestimmten Arbeitstemperatur zu halten.

13. Verfahren zur elektrochemischen Gasmessung, umfassend eine Vorrichtung (100) nach einem der Ansprüche 1 bis 10 einem Gasmedium (1) auszusetzen.

14. Verfahren zur elektrochemischen Gasmessung nach Anspruch 13, weiter umfassend Heizen oder Kühlen der Vorrichtung (100), um sie auf einer bestimmten Arbeitstemperatur zu halten.

## Revendications

1. Dispositif (100) de détection de gaz électrochimique, comprenant une pluralité d'électrodes (4, 5, 6, 9) placées sur un substrat non conducteur (7) et un film d'électrolyte (3) recouvrant lesdites électrodes, dans lequel la pluralité d'électrodes comprend au moins une électrode de travail (4) et une électrode de référence (5), dans lequel le film d'électrolyte est un film de liquide ionique, dans lequel l'électrode de travail et l'électrode de référence présentent une distance (D) différente de leur surface supérieure (4a, 5a) respective à la surface du film d'électrolyte (3a), **caractérisé en ce qu'**au moins l'électrode de travail (4) comprend des structures de montant (4') agencées de façon à maintenir le film de liquide ionique stable et sans rupture.

2. Dispositif (100) selon la revendication 1 dans lequel les structures de montant (4') comprennent un montant non conducteur (8) recouvert complètement ou partiellement d'un matériau d'électrode.

3. Dispositif (100) selon les revendications 1 ou 2 dans lequel les structures de montant (4') présentent une largeur (w) dans une plage entre 1 µm à 100 µm.

4. Dispositif (100) selon l'une quelconque des revendications 1 à 3 dans lequel les structures de montant (4') sont placées à une distance (d) entre elles dans une plage entre 1 µm à 50 µm.

5. Dispositif (100) selon l'une quelconque des revendications précédentes dans lequel la hauteur (H) d'une des électrodes est sélectionnée de sorte que la distance (D) de sa surface supérieure à la surface du film d'électrolyte (3a) soit au moins 25 % inférieure à l'épaisseur totale du film d'électrolyte.

6. Dispositif (100) selon la revendication 5 dans lequel la hauteur (H) est inférieure ou égale à 25 µm.

7. Dispositif (100) selon l'une quelconque des revendications précédentes dans lequel la hauteur (H) de la surface supérieure de l'au moins une électrode de travail (4a) dans la direction perpendiculaire au substrat non conducteur est supérieure à celle de la surface supérieure de l'électrode de référence (5a).

8. Dispositif (100) selon la revendication 7 dans lequel la hauteur (H) de la surface supérieure de l'au moins une électrode de travail (4a) dans la direction perpendiculaire au substrat non conducteur est au moins deux fois celle de la surface supérieure de l'électrode de référence (5a).

9. Dispositif (100) selon l'une quelconque des revendications précédentes comprenant une première électrode de travail (4) configurée pour réagir avec au moins une première molécule (2) et une seconde électrode de travail (9) configurée pour réagir avec une seconde molécule (8) et dans lequel la hauteur (H2) de la surface supérieure de la seconde électrode de travail (9a) dans la direction perpendiculaire au substrat non conducteur est supérieure à la hauteur (H1) de la surface supérieure de la première électrode de travail (4a).

10. Dispositif (100) selon l'une quelconque des revendications précédentes dans lequel les électrodes sont positionnées dans un agencement entrecroisé.

11. Système électronique comprenant un dispositif (100) de détection de gaz électrochimique selon l'une quelconque des revendications 1 à 10.

12. Système électronique selon la revendication 11 comprenant en outre un moyen de chauffage ou de refroidissement pour maintenir le dispositif (100) de détection de gaz électrochimique à une certaine température de travail.

13. Procédé de détection de gaz électrochimique comprenant l'exposition d'un dispositif (100) selon l'une quelconque des revendications 1 à 10 à un milieu gazeux (1).

14. Procédé de détection de gaz électrochimique selon la revendication 13 comprenant en outre le chauffage ou le refroidissement du dispositif (100) pour le maintenir à une certaine température de travail.
